# EUROPÄISCHE PATENTSCHRIFT

(11) **EP 2 129 995 B1**
(45) Veröffentlichungstag und Bekanntmachung des Hinweises auf die Patenterteilung: **20.06.2012**
(21) Anmeldenummer: 08708808.4
(22) Anmeldetag: 08.02.2008
(51) Int. Cl.: G01C 15/00

(54) **MARKIERUNGSSYSTEM MIT EINEM MARKIERUNGSMITTEL SOWIE ABROLLVORRICHTUNG FÜR EIN MARKIERUNGSMITTEL**
MARKING SYSTEM COMPRISING MARKING MEANS AND AN UNROLLING DEVICE FOR MARKING MEANS
SYSTÈME DE MARQUAGE POURVU D'UN MOYEN DE MARQUAGE ET DISPOSITIF DÉROULANT POUR UN MOYEN DE MARQUAGE

(30) Priorität: 29.03.2007 DE 102007016124
(43) Veröffentlichungstag der Anmeldung: 09.12.2009
(73) Patentinhaber: Robert Bosch GmbH, 70442 Stuttgart (DE)
(72) Erfinder: FUCHS, Rudolf, 73765 Neuhausen (DE)
(86) Internationale Anmeldenummer: PCT/EP2008/051530
(87) Internationale Veröffentlichungsnummer: WO 2008/119584

(56) Entgegenhaltungen:
- EP-A- 0 048 469
- DE-A1- 10 034 035
- DE-A1- 10 120 158
- DE-A1- 19 646 779

## Beschreibung

### Stand der Technik

Die Erfindung betrifft ein Markierungssystem gemäß Anspruch 1, die Verwendung eines band- oder schnurförmigen Elementes als Markierungsmittel gemäß Anspruch 10 sowie eine Abrollvorrichtung für ein Markierungsmittel gemäß Anspruch 11.

Laserstrahlvorrichtungen zur Projektion von Laserlinien und Laserkurven auf Objekten sind vor allem im Baubereich verbreitet. Es besteht beispielsweise eine typische Aufgabe darin, zwei Bohrlöcher in einem vorgegebenen Abstand auf einem vorgegebenen Niveau zu erzeugen. Hierzu wird mittels der in der Regel selbstnivellierenden Laserstrahlvorrichtung eine horizontale Linie auf eine Wand projiziert, die das Höhenniveau festlegt. Jetzt müssen lediglich noch die beiden Bohrlöcher in dem vorbestimmten Abstand in die Wand eingebracht werden.

Nachteilig bei dem beschriebenen Vorgehen ist, dass die Bohrlöcher in die Wand eingebracht werden müssen, solange die Laserstrahlvorrichtung, einen Laserstrahl erzeugend in Betrieb ist. Ebenso⁻ ist nachteilig, dass die Laserstrahlvorrichtung je nach Platzverhältnissen die Arbeiten am Objekt behindern kann. Nachteilig ist weiterhin, dass zum Projizieren eines vollständigen Arbeitsbildes mehrere Laserstrahlvorrichtungen gleichzeitig betrieben werden müssen.

Weiterhin ist es bekannt, zum dauerhaften Markieren von mitttels, der Laserstrahlvorrichtung aufgebrachften Abbildungen auf Objekten Markierstitte einzusetzen. Nachteilig hierbei ist jedoch, dass sich die auf das Objekt aufgebrachten Markierungen nicht oder nur schwer entfernen lassen. Ferner gestaltet sich das exakte Nachziehen von Linien und Kurven als schwierig.

Aus der EP 0 048 469 A1 ist ein Verfahren zur Aufbringen von niveauausgerichteten Markierungen auf Flächen bekannt, bei dem eine gebündelte Strahlung, vorzugsweise ein Laserstrahl, verwendet wird, um durch ein Verschwenken des Strahls in einer Horizontalebene Markierungen auf strahlungsempfindliche Schichten, die vor der Bestrahtung auf den Flächen aufgebracht werden, zu erzeugen. Vorzugsweise sind die empfindlichen Schichten bei dem Verfahren der EP 0 048 469 Alauf streifenförmigen Unterlagen wir Papier aufgebracht, wobei es sich bei den empfindlichen Papierstreifen vorzugsweise um einen auf Latentifikation reagierenden Papierstreifen handeln kann, bei dem eine Schwärzung bzw. ein distinktiver Farbunterschied nach der Latentifikation für längere Zeit erhalten bleibt.

### Offenbarung der Erfindung

### Technische Aufgabe

Der Erfindung liegt daher die Aufgabe zugrunde, ein Markierungssystem vorzuschlagen, mit dem eine auf ein Objekt projizierte Abbildung exakt markierbar ist, ohne das Objekt zu beschädigen. Ferner besteht die Aufgabe darin, eine geeignete Abrollvorrichtung zum exakten Plazieren eines Markierungsmittels des Markjerungssystems auf ein Objekt vorzuschlagen

### Technische Lösung

Diese Aufgabe wird hinsichtlich des Markierungunssystems mit den Merkmalen des Anspruchs 1 und hinsichtlich der Abrollvorrichtung mit den Merkmalen des Anspruches 11 gelöst. Vorteilhafte Weiterbildungen der Erfindung sind in den Unteransprüchen angegeben. In der Rahmen der Erfindung lallen auch sämtliche Kombinationen aus zumindest zwei vor in der Beschreibung, den Ansprüchen, und/oder den Figuren angegebe nen Merkmalen.

Der Erfindung liegt der Gedanke zugrunde, ein Markierungssystem, umfassend eine Laserstrainlvorrichtung und ein Markierungsmittel zum Markieren einer von der Laserstrahlvorrichtung auf ein Objekt projizierten Abbildung vorzusehen. Erfindungsgemäß ist das Markierungsmittel band- oder schnurförmig ausgebildet, weist eine also wesentlich größere Längen- als Breitenerstreckung auf, so dass sich das Markierungssystem insbesondere zum Markieren von auf das Objekt projizierten Laserlinien und/oder Laserkurven eignet. Zum Festlegen des Markierungsmittels an dem Objekt ist das Markierungsmittel, bevorzugt ausschließlich, an einer Anlageseite zur Anlage an dem Objekt mit einer Klebstoffschicht versehen, wobei die Klebstoffschicht derart ausgebildet ist, dass das Markierungssystem, vorzugsweise rückstandsfrei, von dem Objekt entfernbar ist. Das erfindungsgemäße Markierungssystem ermöglicht ein besonders komfortables Arbeiten, da zunächst schrittweise ein vollständiges, aus mehreren Abbildungen bestehendes Arbeitsbild auf dem Objekt mittels des Markierungsmittels markiert werden kann, ohne zwischendurch bereits an dem Objekt arbeiten zu müssen. Dabei setzt sich das komplette Arbeitsbild aus einzelnen Abbildungen, wie Linien und/oder Kurven, etc. zusammen, die nacheinander, insbesondere unter zwischenzeitlichem Verfahren der Laserstrahlvorrichtung auf das Objekt projiziert und unmittelbar mit dem Markierungsmittel markiert werden. Bei den eigentlichen Arbeiten an dem Objekt, insbesondere bei dem Einbringen von Bohrungen, die sich an der Abbildung orientieren, muss die Laserstrahlvorrichtung nicht eingeschaltet sein und kann insbesondere zu deren Schutz oder zur Vermeidung der Behinderung bei Arbeiten an dem Objekt aus dem Arbeitsbereich entfernt werden. Nach Abschluss der Arbeiten an dem Objekt können die aufgebrachten Markierungsmittel einfach, bevorzugt rückstandsfrei, insbesondere durch Abziehen von dem Objekt entfernt werden, wodurch eine dauerhafte Beeinträchtigung (Beschädigung) des Objektes vermieden wird.

Zum Aufbringen einer möglichst exakten, also der ursprünglich projizierten Abbildung möglichst genau entsprechenden Markierung ist das Markierungsmittel in Weiterbildung der Erfindung zumindest näherungsweise in der Breite der projizierten Abbildung, insbesondere der Laserlinie ausgebildet. Bevorzugt entspricht die Breite des Markierungsmittels bzw. bei schnurförmigen Markierungsmitteln der Durchmesser weniger als 0,3 cm.

Zum Erzeugen exakt horizontaler und/oder vertikaler Laserlinien, unabhängig von der tatsächlichen Ausrichtung der Laserstrahlvorrichtung, ist es von Vorteil, wenn es sich bei der Laserstrahlvorrichtung um eine selbstnivellierende Pendellaservorrichtung handelt. Dabei kann die Pendellaservorrichtung sowohl als Rotationslaser oder auch als Linienlaser ausgebildet werden. Daneben ist es denkbar, als Laserstrahlvorrichtung einen einfachen Laser mit Nivelliermöglichkeiten, wie beispielsweise Wasserwaagen mit eingebauter Laserfunktion zum projizieren einer Abbildung auf ein Objekt zu verwenden.

Insbesondere für den Einsatzzweck, dass zwei Bohrungen auf einem bestimmten Niveau in einem definierten Abstand zueinander eingebracht werden sollen, ist es von Vorteil, wenn das Markierungsmittel auf einer der Anlageseite gegenüberliegenden Seite mit einer Skalierung, insbesondere einer Entfernungsskalierung versehen ist.

Um für einen Benutzer klar kenntlich zu machen, ob es sich bei einer bestimmten Seite des Markierungsmittels um die mit Klebstoff versehene Anlageseite oder die gegenüberliegende, nach Anbringen des Markierungsmittels sichtbare Seite handelt, ist in Ausgestaltung der Erfindung mit Vorteil vorgesehen, dass die Sichtseite optisch abgesetzt ist. Um auch einen möglichst großen Kontrast gegenüber dem Objekt zu bilden, ist die Sichtseite bevorzugt eingefärbt, insbesondere mit einer grellen hervorstechenden Farbe oder einem entsprechenden Farbmuster.

Besonders komfortabel lässt sich das Markierungsmittel gemäß einer Weiterbildung der Erfindung handhaben, nach der das Markierungsmittel, insbesondere auf eine Rolle aufgerollt ist und somit von der Rolle zu Zwecken der Festlegung an dem Objekt abrollbar ist. Insbesondere für eine derartige Bereitstellung des Markierungsmittels muss das Markierungsmittel quer zu seiner Längserstreckung flexibel ausgebildet sein.

Von Vorteil ist eine Ausführungsform, bei der das Markierungsmittel nach einem Markiervorgang nicht mittels eines Werkzeugs, insbesondere einer Schere abgetrennt werden muss, sondern dass das Markierungsmittel derart beschaffen ist, dass es von Hand abreißbar ist. Gegebenenfalls kann das Markierungsmittel hierzu, insbesondere in regelmäßigen Abständen mit Perforierungen versehen sein.

Um auch nicht-gerade Abbildungen, insbesondere kurvenförmige Abbildungen mittels des Markierungsmittels exakt markieren zu können, ist es von Vorteil, wenn das Markierungsmittel quer zum Objekt flexibel verformbar ausgebildet ist. Bevorzugt ist das Markierungsmittel in sämtliche Querrichtungen zu seiner Längserstreckung flexibel ausgebildet, was sich insbesondere durch eine schnurförmige Ausbildung des Markierungsmittels realisieren lässt.

Mit Vorteil umfasst das Markierungssystem eine später noch zu erläuternde Abrollvorrichtung zur exakten Positionierung des Markierungsmittels auf der projizierten Abbildung.

Gegenstand der Erfindung ist weiterhin die Verwendung eines band- oder schnurförmigen Elementes, das auf einer Seite mit einer Klebstoffschicht zum lösbaren Festlegen an einem Objekt versehen ist, als Markierungsmittel zum Markieren einer mittels eines Lasers auf ein Objekt projizierten Abbildung. Diese Vorgehensweise ermöglicht, wie zuvor erläutert, das vollständige, aus mehreren Teillinien und/oder Kurven bestehende Arbeitsbild auf dem Objekt darzustellen, bevor mit den eigentlichen Arbeiten am Objekt begonnen wird.

Ferner ist Gegenstand der Erfindung eine Abrollvorrichtung zum automatischen oder manuellen Abrollen eines aufgerollen band- oder schnurförmigen Markierungsmittels. Unter einem automatischen Abrollen ist zu verstehen, dass die Abrollvorrichtung motorisch, insbesondere elektromotorisch unterstützt arbeitet, wohingegen bei einem manuellen Abrollen auf das Vorsehen eines motorischen Antriebs verzichtet wird. Die erfindungsgemäße Abrollvorrichtung ist mit einem Sensor, insbesondere einem Lichtsensor ausgerüstet, dessen Sensorfläche bevorzugt in der Breite, gegebenenfalls zuzüglich eines Spiele, des von der Laservorrichtung erzeugten Laserstrahls ausgebildet ist. Mittels des Sensors und einer damit verbundenen Logikeinheit ist es möglich, festzustellen, ob sich der Sensor während des Abrollvorgangs im Bereich des Laserstrahls befindet und somit das Markierungsmittel exakt auf der projizierten Abbildung aufgebracht wird, oder nicht. Die Abrollvorrichtung ist hierzu mit mit der elektronischen Logikeinheit verbundenen Signalmitteln versehen, die signalisieren, ob der Sensor den Laserstrahl erfasst oder nicht und sich folglich eine Ausgabeöffnung der Abrollvorrichtung (unmittelbar) oberhalb der projizierten Abbildung bzw. in Deckung mit der projizierten Abbildung befindet, oder nicht.

Bevorzugt handelt es sich bei den Signalmitteln um optische und/oder akustische Signalmittel. Mit Vorteil wird nur dann ein Signal ausgegeben, wenn der Sensor den Laserstrahl erfasst, oder wenn er diesen nicht erfasst. Gegebenenfalls können auch unterschiedliche Signale für die beiden Zustände ausgegeben werden.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Fig. 1:: eine Seitenansicht eines bei einem Markierungssystem zum Einsatz kommenden Markierungsmittels,
- Fig. 2:: ein Markierungssystem mit Abrollvorrichtung und
- Fig. 3:: eine schematische Schnittansicht einer Abrollvorrichtung.

### Ausführungsformen der Erfindung

In den Figuren sind gleiche Bauteile und Bauteile mit der gleichen Funktion mit den gleichen Bezugszeichen gekennzeichnet.

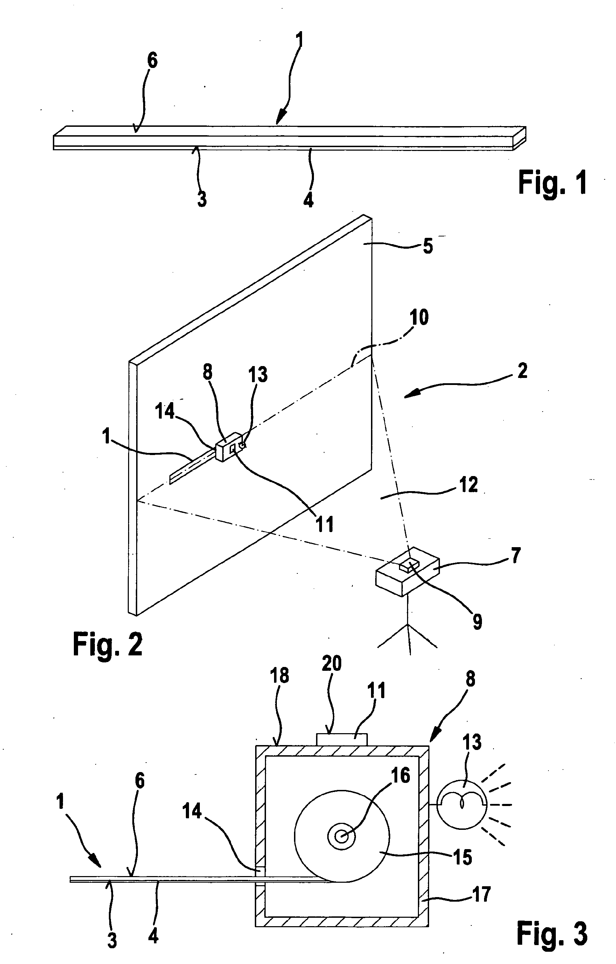

In Fig. 1 ist ein bandförmiges Markierungsmittel 1 eines in Fig. 2 gezeigten Markierungssystems 2 dargestellt. Das Markierungsmittel 1 ist auf einer Anlageseite 3 mit einer Klebstoffschicht 4 versehen, die ein lösbares Befestigen des Markierungsmittels 1 auf einem in Fig. 2 gezeigten Objekt 5 ermöglicht. Dabei ist die Klebstoffschicht 4 derart ausgebildet, dass das Markierungsmittel 1 rückstandsfrei entfernbar ist, ohne die Oberfläche des Objektes 5 zu beschädigen. Gegebenenfalls kann die Klebstoffschicht 4 mit einem Schutzmittel, insbesondere einer Schutzfolie oder einem Schutzpapier versehen werden, das vor dem Aufkleben des Markierungsmittels 1 auf das Objekt 5 entfernt wird.

Der Anlageseite 3 gegenüberliegend befindet sich eine parallel zur Anlageseite 3 verlaufende Sichtseite 6. Diese ist farblich von der Anlageseite 3 abgesetzt und kann gegebenenfalls mit einer Skalierung versehen sein.

In Fig. 2 ist ein Markierungssystem 2, umfassend ein Markierungsmittel 1, eine als Linien-Pendellaser-Vorrichtung ausgebildete Laserstrahlvorrichtung 7 und eine Abrollvorrichtung 8 für das Markierungsmittel 1 gezeigt.

Mittels der eine pendelnd gelagerte Laserstrahlquelle 9 aufweisenden Laserstrahlvorrichtung 7 wird eine linienförmige Abbildung 10 an das Objekt 5 projiziert. Von der Abrollvorrichtung 8 wird das in Fig. 1 im Detail gezeigte Markierungsmittel 1 abgerollt, wodurch für eine exakte Aufbringung des Markierungsmittels 1 auf die Abbildung 10 gesorgt wird. Hierzu ist die Abrollvorrichtung 8 mit einem optischen Sensor 11 versehen, dessen Sensorfläche der Breite der Abbildung 10 zuzüglich eines Spiels entspricht. Solange sich der Sensor 11 innerhalb des von der Laserstrahlquelle 9 erzeugten Laserstrahls 12 befindet wird von einem seitlichen Signalmittel 13 in der Form eines Lautsprechers kein akustisches Signal ausgegeben. Somit ist sichergestellt, dass eine Ausgabeöffnung 14 der Abrollvorrichtung 8 sich unmittelbar oberhalb der Abbildung 10 befindet, wodurch wiederum sichergestellt ist, dass das Markierungsmittel 1 exakt auf der Abbildung 10 auf das Objekt 5 aufgeklebt wird.

In Fig. 3 ist in einer schematischen Darstellung eine Schnittansicht einer Abrollvorrichtung 8 gezeigt. Die gezeigte Abrollvorrichtung 8 dient zum manuellen Abrollen des auf einer Rolle 15 aufgerollten Markierüngsmittels 1. Die Rolle 15 ist drehbar auf einer feststehenden Achse 16 innerhalb eines Gehäuses 17 der Abrollvorrichtung 8 gelagert. Das Markierungsmittel 1 ist durch eine Ausgabeöffnung 14 hindurch aus dem Gehäuse 17 geführt, wobei sich die Anlageseite 3 mit einer Klebstoffschicht 4 auf der Unterseite des Markierungsmittels 1,-gegenüberliegend von der Sichtseite 6 befindet.

Auf der Oberseite 18 des Gehäuses 17 ist der optische Sensor 11 zum Erfassen eines Laserstrahls 12 angeordnet. An einer Seitenwand 19 befindet sich ein Signalmittel 13, das in diesem Ausführungsbeispiel als Leuchtdiodeanordnung ausgebildet ist. Solange der Sensor 11 den Laserstrahl 12 erfasst und sich somit die Ausgabeöffnung 14 oberhalb der Abbil-dung befindet, wird ein grünes Lichtsignal abgegeben, wobei das Lichtsignal von grün auf rot wechselt, sobald der fest an dem Gehäuse 17 angeordnete Sensor 11 bzw. dessen Sensorfläche 20 aus dem Einflussbereich des Laserstrahls 12 herausgeführt wird.

## Patentansprüche

1. Markierungssystem mit einer eine Laserstrahlquelle (9) aufweisenden Laserstrahlvorrichtung (7) und mit einem Markierungsmittel (1) zum Markieren einer von der Laserstrahlvorrichtung (7) mittels eines Laserstrahls (12) auf ein Objekt (5) projizierten Abbildung (10), insbesondere einer Laserlinie,
**dadurch gekennzeichnet,**
**dass** das Markierungsmittel (1) band- oder schurförmig ausgebildet ist und auf einer Anlageseite (3) eine Klebstoffschicht (4) zum lösbaren Festlegen des Markierungsmittels (1) an dem Objekt aufweist.

2. Markierungssystem nach Anspruch 1,
**dadurch gekennzeichnet,**
**dass** das Markierungsmittel (1) zumindest näherungsweise der Breite der Abbildung, insbesondere der Laserlinie, entspricht, vorzugsweise dass die Breite weniger als etwa 1 cm, vorzugsweise weniger als 0,5 cm, bevorzugt weniger als 0,3 cm beträgt.

3. Markierungssystem nach einem der vorhergehenden Ansprüche,
**dadurch gekennzeichnet,**
**dass** die Laserstrahlvorrichtung (7) eine selbstnivellierende Pendellaservorrichtung ist.

4. Markierungssystem nach einem der vorhergehenden Ansprüche,
**dadurch gekennzeichnet,**
**dass** das Markierungsmittel (1), insbesondere auf einer der Anlageseite (3) gegenüberliegenden Seite mit einer Skalierung versehen ist.

5. Markierungssystem nach einem der vorhergehenden Ansprüche,
**dadurch gekennzeichnet,**
**dass** eine der Anlageseite (3) gegenüberliegende Seite optisch, insbesondere farblich, von der Anlageseite (3) differenziert ist.

6. Markierungssystem nach einem der vorhergehenden Ausprüche,
**dadurch gekennzeichnet,**
**dass** das Markierungsmittel (1) aufgerollt und abrollbar ist.

7. Markierungssystem nach einem der vorhergehenden Ansprüche,
**dadurch gekennzeichnet,**
**dass** das Markierungsmittel (1) von Hand abreißbar ist.

8. Markierungssystem nach einem der vorhergehenden Ansprüche,
**dadurch gekennzeichnet,**
**dass** das Markierungsmittel (1) in sämtliche Querrichtungen zu seiner Längserstreckung flexibel ist.

9. Markierungssystem nach einem der vorhergehenden Ansprüche,
**dadurch gekennzeichnet,**
**dass** das Markierungssystem (2) eine Abrollvorrichtung (7) für das Markierungsmittel (1) umfasst.

10. Verwendung eines band- oder schnurförmigen Elements, das auf einer Anlageseite (3) eine Klebstoffschicht (4) zum lösbaren Festlegen an einem Objekt (5) aufweist, als Markierungsmittel (1) zum Markieren einer von einem eine Laserstrahlquelle (9) aufweisenden Laserstrahlvorrichtung (7) mittels eines Laserstrahls (12) auf das Objekt (5) projizierten Abbildung (10).

11. Abrollvorrichtung zum automatischen oder manuellen Abrollen eines aufgerollten band- oder schurförmigen Markierungsmittels (1), welches auf einer Anlageseite (3) mit einer Klebstoffschicht (4) zum lösbaren Festlegen des Markierungsmittels (1) an einem Objekt (5) versehen ist, mit einem Sensor (11) zum Detektieren eines Laserstrahls (12) und mit Signalmitteln (13), zum Signalisieren, ob der Sensor (11) auf den Laserstrahl (12) gerichtet ist oder nicht.

12. Abrollvorrichtung nach Anspruch 11,
**dadurch gekennzeichnet,**
**dass** die Signalmittel (13) ein optisches und/oder akustisches Signal ausgebend ausgebildet sind, wenn der Sensor (11) von dem Laserstrahl (12) beaufschlagt ist und/oder wenn der Detektor nicht von dem Laserstrahl (12) beaufschlagt ist.

## Claims

1. Marking system with a laser beam device (7) having a laser beam source (9), and with a marking means (1) for marking an image (10), in particular a laser line, that is projected onto an object (5) by means of a laser beam (12) by the laser beam device (7), **characterized in that** the marking means (1) is of tapelike or cordlike design and has on a bearing side (3) an adhesive layer (4) for detachably fixing the marking means (1) on the object.

2. Marking system according to Claim 1, **characterized in that** the marking means (1) corresponds at least approximately to the width of the image, in particular the laser line, preferably **in that** the width is less than approximately 1 cm, preferably less than 0.5 cm, preferably less than 0.3 cm.

3. Marking system according to one of the preceding claims, **characterized in that** the laser beam device (7) is a self-levelling pendulum laser device.

4. Marking system according to one of the preceding claims, **characterized in that** the marking means (1) is provided with a scale, in particular on a side opposite the bearing side (3).

5. Marking system according to one of the preceding claims, **characterized in that** a side opposite the bearing side (3) is differentiated visually, in particular by colour, from the bearing side (3).

6. Marking system according to one of the preceding claims, **characterized in that** the marking means (1) is rolled up and can be unrolled.

7. Marking system according to one of the preceding claims, **characterized in that** the marking means (1) can be torn off by hand.

8. Marking system according to one of the preceding claims, **characterized in that** the marking means (1) is flexible in all transverse directions relative to its longitudinal extent.

9. Marking system according to one of the preceding claims, **characterized in that** the marking system (2) comprises an unrolling device (8) for the marking means (1) .

10. Use of a tapelike or cordlike element which has on a bearing side (3) an adhesive layer (4) for detachably fixing on an object (5) as marking means (1) for marking an image (10) projected onto the object (5) by means of a laser beam (12) by a laser beam device (7) having a laser beam source (9).

11. Unrolling device for automatically or manually unrolling a rolled up tapelike or cordlike marking means (1) which is provided on a bearing side (3) with an adhesive layer (4) for detachably fixing the marking means (1) on an object (5), having a sensor (11) for detecting a laser beam (12), and having signalling means (13) for signalling whether the sensor (11) is directed onto the laser beam (12) or not.

12. Unrolling device according to Claim 11, **characterized in that** the signalling means (13) are designed to output an optical and/or acoustic signal when the sensor (11) is struck by the laser beam (12) and/or when the detector is not struck by the laser beam (12).

## Revendications

1. Système de marquage doté d'un dispositif (7) à faisceau laser qui présente une source (9) de rayon laser et d'un moyen de marquage (1) qui marque une représentation (10) projetée par le dispositif (7) à faisceau laser sur un objet (5) au moyen d'un faisceau laser (12), en particulier une ligne laser,
**caractérisé en ce que**
le moyen de marquage (1) est configuré en forme de ruban ou de mèche et présente sur un côté d'application (3) une couche d'adhésif (4) qui permet de fixer de manière libérable le moyen de marquage (1) sur l'objet.

2. Système de marquage selon la revendication 1, **caractérisé en ce que** le moyen de marquage (1) correspond au moins approximativement à la largeur de la représentation et en particulier de la ligne laser, et de préférence **en ce que** la largeur est inférieure à environ 1 cm, de préférence inférieure à 0,5 cm et de manière préférable inférieure à 0,3 cm.

3. Système de marquage selon l'une des revendications précédentes, **caractérisé en ce que** le dispositif (7) à faisceau laser est un dispositif laser pendulaire à auto-nivellement.

4. Système de marquage selon l'une des revendications précédentes, **caractérisé en ce que** le moyen de marquage (1) est doté d'une échelle, en particulier sur un côté opposé au côté d'application (3).

5. Système de marquage selon l'une des revendications précédentes, **caractérisé en ce qu'**un côté opposé au côté d'application (3) diffère visuellement du côté d'application (3), en particulier par sa couleur.

6. Système de marquage selon l'une des revendications précédentes, **caractérisé en ce que** le moyen de marquage (1) est enroulé et peut être déroulé.

7. Système de marquage selon l'une des revendications précédentes, **caractérisé en ce que** le moyen de marquage (1) peut être déchiré à la main.

8. Système de marquage selon l'une des revendications précédentes, **caractérisé en ce que** le moyen de marquage (1) est flexible dans toutes les directions transversales par rapport à sa longueur.

9. Système de marquage selon l'une des revendications précédentes, **caractérisé en ce que** le système de marquage (2) comporte un dispositif (8) de déroulement du moyen de marquage (1).

10. Utilisation d'un élément en forme de ruban ou de mèche qui présente sur un côté d'application (3) une couche d'adhésif (4) qui permet de le fixer de manière libérable sur un objet (5), comme moyen de marquage (1) destiné à marquer une représentation (10) projetée sur l'objet (5), au moyen d'un faisceau laser (12), par un dispositif (7) à faisceau laser qui présente une source (9) de faisceau laser.

11. Dispositif de déroulement qui permet de dérouler automatiquement ou à la main un moyen de marquage (1) en forme de ruban ou de mèche enroulé, doté sur un côté d'application (3) d'une couche d'adhésif (4) qui permet de fixer de manière libérable le moyen de marquage (1) sur un objet (5), et doté d'un détecteur (11) qui détecte un faisceau laser (12) et de moyens de signalisation (13) qui signalent si le détecteur (11) est dirigé ou non sur le faisceau laser (12).

12. Dispositif de déroulement selon la revendication 11, **caractérisé en ce que** les moyens de signalisation (13) sont configurés pour émettre un signal optique et/ou un signal acoustique lorsque le faisceau laser (12) est appliqué sur le détecteur (11) et/ou lorsque le faisceau laser (12) n'est pas appliqué sur le détecteur.
